# EUROPEAN PATENT APPLICATION

(11) **EP 4 783 474 A1**
(43) Date of publication of application: **29.07.2026**
(21) Application number: 24884231.2
(22) Date of filing: 03.09.2024
(51) Int. Cl.: H04B 3/54

(54) **POWER LINE COMMUNICATION METHOD AND APPARATUS**

(30) Priority: 30.10.2023 CN 202311424820
(71) Applicant: HUAWEI TECHNOLOGIES CO., LTD., Shenzhen 518129 (CN)
(72) Inventor: LIU, Guoen, Shenzhen, Guangdong 518129 (CN)
(74) Representative: Gill Jennings & Every LLP
(86) International application number: PCT/CN2024/116596
(87) International publication number: WO 2025/092224

(57) **Abstract**

Embodiments of this application disclose a power line communication method and apparatus. The method includes: A first device generates a physical protocol data unit PPDU frame, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol; and the first device sends the PPDU frame to a second device. According to embodiments of this application, the redefined PPDU frame enables power line communication to support features such as MIMO and high bandwidth, thereby improving overall network performance.

## Description

This application claims priority to Chinese Patent Application No. 202311424820.9, filed with the China National Intellectual Property Administration on October 30, 2023 and entitled "POWER LINE COMMUNICATION METHOD AND APPARATUS", which is incorporated herein by reference in its entirety.

### TECHNICAL FIELD

This application relates to the field of communication technologies, and in particular, to a power line communication method and apparatus.

### BACKGROUND

Power line communication (power line communication, PLC), also referred to as a power line network, is a technology that uses existing power lines to transmit analog or digital signals in carrier mode, and is a unique communication mode of a power system. Compared with other wired communication technologies such as a digital subscriber line (digital subscriber line, DSL) technology that uses telephone lines and a cable modem (cable modem, CM) that uses coaxial cable lines of cable televisions, the PLC technology uses existing low-frequency (50/60 hertz) power lines to send broadband data. The power line communication technology can use existing power networks without additional wiring, and can implement rapid deployment without additional separate wiring. In addition, the power lines cover a wider region than lines of other communication carriers.

With emergence of new power grid application scenarios (such as charging piles and home energy consumption control), requirements of a larger capacity, a wider coverage range, and real-time communication are imposed on power line communication. Therefore, it is necessary to introduce high-order features such as multiple-input multiple-output (multiple-input multiple-output, MIMO) and high bandwidth into the power line communication technology, to improve applicability of power line communication to different application scenarios. However, frame formats in existing power line communication standards cannot be extended to support features such as MIMO and newly defined bandwidth, and cannot meet requirements such as high bandwidth and a low delay in new power line application scenarios.

### SUMMARY

Embodiments of this application provide a power line communication method and apparatus, so that a redefined PPDU frame enables power line communication to support features such as MIMO and high bandwidth, thereby improving overall network performance.

According to a first aspect, an embodiment of this application provides a power line communication method. The method is applied to a first device, or a chip or a circuit configured in the first device, and includes:
generating a physical protocol data unit PPDU frame, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol; and sending the PPDU frame to a second device.

The PPDU frame is redefined. The redefined PPDU frame includes the frame control field, the training symbol field, and the payload symbol field. Channel estimation in multiple-input multiple-output MIMO and the extended bandwidth is implemented by using the training symbol field. The frame type of the start of frame SOF frame included in the PPDU frame is indicated by the frame identifier field. The available frequency band of the training symbol and the payload symbol is indicated by the frequency band field. In this way, power line communication supports features such as MIMO and high bandwidth, thereby improving overall network performance.

In a possible design, the frame control field includes a general field, the general field includes a delimiter type field and a standard version number field, the delimiter type field indicates a frame type of the PPDU frame, and the standard version number field indicates a power line communication PLC version supported by the PPDU frame. The type of the SOF frame is extended by using the standard version number field and the delimiter type field, to support the frame type of the PPDU frame, for example, a MIMO frame, an OFDMA frame, or a MU-MIMO frame.

In a possible design, the variable area field includes a source device identifier field and a destination device identifier field, the source device identifier field indicates an identifier of the first device, and the destination device identifier field indicates an identifier of the second device. The first device and the second device that perform power line communication can be determined by using the source device identifier field and the destination device identifier field.

In a possible design, the variable area field includes a modulation and coding scheme MCS field and/or a code rate field, the MCS field indicates a modulation scheme of the SOF frame, and the code rate field indicates a coding rate of the SOF frame.

In a possible design, the variable area field includes a physical block size field and/or a physical block number field, the physical block size field indicates a size of a physical block carried in the payload symbol field, and the physical block number field indicates a maximum number of physical blocks supported by the payload symbol field for carrying.

For the redefined PPDU frame, an OFDM symbol number field is no longer reserved in the frame control field. After receiving the PPDU frame, the second device can obtain, through calculation based on an MCS, a code rate, the size of the physical block, a number of physical blocks, and the like, a number of OFDM symbols carried in the payload symbol field.

In a possible design, the variable area field includes a data beamforming flag field, and the data beamforming flag field indicates whether beamforming is used for the SOF frame.

In a possible design, the variable area field includes a bit loading field, and the bit loading field indicates whether bit loading is used for the SOF frame.

An SOF frame for which beamforming and bit loading are used can support ToneMap grouping, that is, a power frequency periodicity can be divided into a plurality of windows. A different number of subcarriers to be transmitted in each of the plurality of windows is determined based on a different signal-to-noise ratio corresponding to an interference variation.

According to a second aspect, an embodiment of this application provides a power line communication method. The method is applied to a second device, or a chip or a circuit configured in the second device, and includes:
receiving a physical protocol data unit PPDU frame sent by a first device, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol.

The PPDU frame is redefined. The redefined PPDU frame includes the frame control field, the training symbol field, and the payload symbol field. Channel estimation in multiple-input multiple-output MIMO and the extended bandwidth is implemented by using the training symbol field. The frame type of the start of frame SOF frame included in the PPDU frame is indicated by the frame identifier field. The available frequency band of the training symbol and the payload symbol is indicated by the frequency band field. In this way, power line communication supports features such as MIMO and high bandwidth, thereby improving overall network performance.

In a possible design, the frame control field includes a general field, the general field includes a delimiter type field and a standard version number field, the delimiter type field indicates a frame type of the PPDU frame, and the standard version number field indicates a power line communication PLC version supported by the PPDU frame. The type of the SOF frame is extended by using the standard version number field and the delimiter type field, to support the frame type of the PPDU frame, for example, a MIMO frame, an OFDMA frame, or a MU-MIMO frame.

In a possible design, the variable area field includes a source device identifier field and a destination device identifier field, the source device identifier field indicates an identifier of the first device, and the destination device identifier field indicates an identifier of the second device. The first device and the second device that perform power line communication can be determined by using the source device identifier field and the destination device identifier field.

In a possible design, the variable area field includes a modulation and coding scheme MCS field and/or a code rate field, the MCS field indicates a modulation scheme of the SOF frame, and the code rate field indicates a coding rate of the SOF frame.

In a possible design, the variable area field includes a physical block size field and/or a physical block number field, the physical block size field indicates a size of a physical block carried in the payload symbol field, and the physical block number field indicates a maximum number of physical blocks supported by the payload symbol field for carrying.

For the redefined PPDU frame, an OFDM symbol number field is no longer reserved in the frame control field. After receiving the PPDU frame, the second device can obtain, through calculation based on an MCS, a code rate, the size of the physical block, a number of physical blocks, and the like, a number of OFDM symbols carried in the payload symbol field.

In a possible design, the variable area field includes a data beamforming flag field, and the data beamforming flag field indicates whether beamforming is used for the SOF frame.

In a possible design, the variable area field includes a bit loading field, and the bit loading field indicates whether bit loading is used for the SOF frame.

An SOF frame for which beamforming and bit loading are used can support ToneMap grouping, that is, a power frequency periodicity can be divided into a plurality of windows. A different number of subcarriers to be transmitted in each of the plurality of windows is determined based on a different signal-to-noise ratio corresponding to an interference variation.

According to a third aspect, an embodiment of this application provides a power line communication apparatus, including:
a processing module, configured to generate a physical protocol data unit PPDU frame, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol; and
a sending module, configured to send the PPDU frame to a second device.

In a possible design, the frame control field includes a general field, the general field includes a delimiter type field and a standard version number field, the delimiter type field indicates a frame type of the PPDU frame, and the standard version number field indicates a power line communication PLC version supported by the PPDU frame.

In a possible design, the variable area field includes a source device identifier field and a destination device identifier field, the source device identifier field indicates an identifier of a first device, and the destination device identifier field indicates an identifier of the second device.

In a possible design, the variable area field includes a modulation and coding scheme MCS field and/or a code rate field, the MCS field indicates a modulation scheme of the SOF frame, and the code rate field indicates a coding rate of the SOF frame.

In a possible design, the variable area field includes a physical block size field and/or a physical block number field, the physical block size field indicates a size of a physical block carried in the payload symbol field, and the physical block number field indicates a maximum number of physical blocks supported by the payload symbol field for carrying.

In a possible design, the variable area field includes a data beamforming flag field, and the data beamforming flag field indicates whether beamforming is used for the SOF frame.

In a possible design, the variable area field includes a bit loading field, and the bit loading field indicates whether bit loading is used for the SOF frame.

For operations performed by the communication apparatus and beneficial effect thereof, refer to the method according to the first aspect and the beneficial effect thereof. Repeated parts are not described again.

According to a fourth aspect, an embodiment of this application provides a power line communication apparatus, including:
a receiving module, configured to receive a physical protocol data unit PPDU frame sent by a first device, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol.

In a possible design, the frame control field further includes a general field, the general field includes a delimiter type field and a standard version number field, the delimiter type field indicates a frame type of the PPDU frame, and the standard version number field indicates a power line communication PLC version supported by the PPDU frame.

In a possible design, the variable area field includes a source device identifier field and a destination device identifier field, the source device identifier field indicates an identifier of the first device, and the destination device identifier field indicates an identifier of a second device.

In a possible design, the variable area field includes a modulation and coding scheme MCS field and/or a code rate field, the MCS field indicates a modulation scheme of the SOF frame, and the code rate field indicates a coding rate of the SOF frame.

In a possible design, the variable area field includes a physical block size field and/or a physical block number field, the physical block size field indicates a size of a physical block carried in the payload symbol field, and the physical block number field indicates a maximum number of physical blocks supported by the payload symbol field for carrying.

In a possible design, the variable area field includes a data beamforming flag field, and the data beamforming flag field indicates whether beamforming is used for the SOF frame.

In a possible design, the variable area field includes a bit loading field, and the bit loading field indicates whether bit loading is used for the SOF frame.

For operations performed by the communication apparatus and beneficial effect thereof, refer to the method according to the second aspect and the beneficial effect thereof. Repeated parts are not described again.

According to a fifth aspect, this application provides a power line communication apparatus. The power line communication apparatus includes a processor and a memory. The memory is configured to store a computer program. The processor is configured to execute the computer program stored in the memory, to enable the power line communication apparatus to perform the method according to any one of the possible designs of the first aspect.

According to a sixth aspect, this application provides a power line communication apparatus. The power line communication apparatus includes a processor and a memory. The memory is configured to store a computer program. The processor is configured to execute the computer program stored in the memory, to enable the power line communication apparatus to perform the method according to any one of the possible designs of the second aspect.

According to a seventh aspect, this application provides a power line communication apparatus. The apparatus may be a power line communication device, or may be an apparatus in the power line communication device, or may be an apparatus that can be used by matching the power line communication device. The power line communication apparatus may alternatively be a chip system. The power line communication apparatus may perform the method according to the first aspect or the second aspect. A function of the power line communication apparatus may be implemented by hardware, or may be implemented by hardware by executing corresponding software. The hardware or the software includes one or more modules corresponding to the foregoing function. The module may be software and/or hardware. For operations performed by the communication apparatus and beneficial effect thereof, refer to the method according to the first aspect or the second aspect and the beneficial effect thereof. Repeated parts are not described again.

According to an eighth aspect, this application provides a computer-readable storage medium. The computer-readable storage medium is configured to store a computer program. When the computer program is executed, the method according to any one of the possible designs of the first aspect and the second aspect is implemented.

According to a ninth aspect, this application provides a computer program product including a computer program. When the computer program is executed, the method according to any one of the possible designs of the first aspect and the second aspect is implemented.

According to a tenth aspect, an embodiment of this application provides a communication system. The communication system includes at least one power line communication device. The power line communication device is configured to perform a step in the first aspect or the second aspect.

According to an eleventh aspect, a chip is provided. The chip includes a processor and a communication interface. The communication interface is configured to communicate with an external component or an internal component. The processor is configured to implement the method according to the foregoing aspects.

In a possible design, the chip may further include a memory. The memory stores a computer program or instructions. The processor is configured to execute the computer program or the instructions stored in the memory, or another program or instructions. When the computer program or the instructions are executed, the processor is configured to implement the method according to the foregoing aspects.

In a possible design, the chip may be integrated into a power line communication device.

### BRIEF DESCRIPTION OF DRAWINGS

To describe technical solutions in embodiments of this application or in the background more clearly, the following describes accompanying drawings for describing embodiments of this application or the background.
FIG. 1 is a diagram of a system architecture of a power line communication system according to an embodiment of this application;
FIG. 2 is a diagram of a format of a PPDU frame;
FIG. 3 is a schematic flowchart of a power line communication method according to an embodiment of this application;
FIG. 4 is a diagram of a PPDU frame according to an embodiment of this application;
FIG. 5 is a diagram of a structure of a power line communication apparatus according to an embodiment of this application;
FIG. 6 is a diagram of a structure of another power line communication apparatus according to an embodiment of this application; and
FIG. 7 is a diagram of a structure of a power line communication device according to an embodiment of this application.

### DESCRIPTION OF EMBODIMENTS

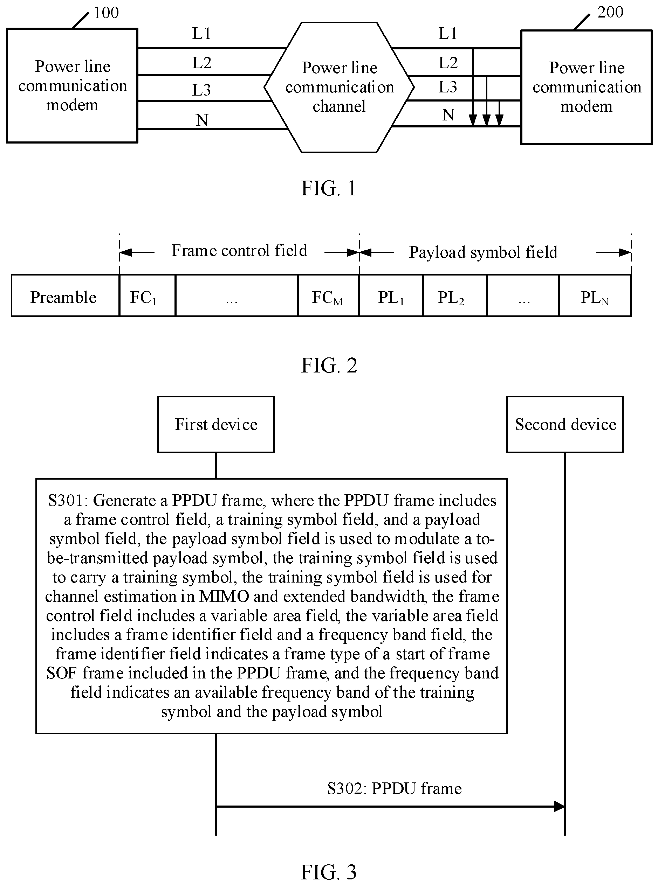

FIG. 1 is a diagram of a system architecture of a power line communication system according to an embodiment of this application. The power line communication system includes at least two power line communication modems, for example, includes a power line communication modem 100 and a power line communication modem 200. The power line communication modem is a modem (Modem) that performs broadband internet access through a power line. Each power line communication modem in the at least two power line communication modems may be connected to each other through the power line. The power line includes three live (live, L) wires and a neutral (neutral, N) wire of three-phase electric power. The three live wires include a live wire L1, a live wire L2, and a live wire L3. The live wire L1, the live wire L2, and the live wire L3 may respectively form three differential channels with the neutral wire N. The power line communication modem 100 and the power line communication modem 200 may communicate with each other through the differential channels.

State Grid Corporation of China enterprise standards use a power line communication technology and an orthogonal frequency-division multiplexing (orthogonal frequency-division multiplexing, OFDM) modulation technology that are mainly used for a power line automated meter reading (automated meter reading, AMR) service. Because the power line is not a dedicated line designed for communication, an environment of communication lines is harsh, and various types of pulse noise and clutter interference exist. In addition, indeterminacy of a connected electric appliance also causes an impedance mismatch, multipath effect, and the like, severely affecting signal transmission.

FIG. 2 is a diagram of a format of a physical protocol data unit (physical protocol data unit, PPDU) frame. In an existing power line communication standard, the PPDU frame includes a preamble (preamble) field, a frame control (frame control, FC) field, and a payload (payload, PL) symbol field. The preamble field is used for gain control, frame synchronization, and channel estimation. The frame control field is used to define information such as a frame type, a device address, and modulation. The payload symbol field is used to modulate to-be-transmitted payload data. The PPDU frame may also be referred to as a PLC 1.0 frame. A device that supports only a PLC 1.0 protocol may be referred to as a PLC 1.0 device. The PLC 1.0 protocol may be considered as a point-to-point communication protocol for power line devices, but supports only single-input single-output (single-input single-output, SISO) and uses a low frequency band for communication.

**Table 1**

| | Field definition | Number of bits | Descriptions |
|---|---|---|---|
| General field | Delimiter type | 3 | Indicate a type of the PPDU frame: |
| | | | 0: beacon frame; 1: SOF frame; 2: selective acknowledgment frame; 3: inter-network coordination frame |
| | | | others: reserved |
| | Network type | 5 | Indicate a type of a network on which a device that sends a PPDU is |
| | | | 0: power consumption information collection system in which the PPDU is transmitted; others: reserved |
| | Network identifier | 24 | Distinguish between different high-speed carrier communication networks, where each high-speed carrier communication network needs to have a unique network identifier NID |
| | Variable area | | Content in the variable area field is determined by the delimiter type |
| | Standard version number | 4 | Different versions evolved from a standard |
| | CRC | 24 | Cyclic redundancy check sequence of first 13 bytes in the frame control field |

**Table 2**

| Frame type | Field definition | Number of bits | Descriptions |
|---|---|---|---|
| Variable area field of the SOF frame | Source TEI | 12 | Source terminal equipment identifier TEI of the SOF frame |
| | Destination TEI | 12 | Destination terminal equipment identifier TEI of the SOF frame, where after receiving the SOF frame, a destination device needs to send a selective acknowledgment frame in response |
| | Link identifier | 8 | Different priorities or different service classifications |
| | | | 0 to 3: packet priorities; 4 to 254: service classifications 255: invalid value, where a larger value indicates a higher priority |
| | Frame length | 12 | Indicate duration of a channel occupied by a transmission process, an interframe space, and the like of the SOF frame, in a unit of 10 microseconds |
| | Physical block number | 4 | Indicate a number of physical blocks carried in the payload symbol field of the SOF frame, where the SOF frame may support one to four physical blocks, and a size of the physical block is 72 bytes, 136 bytes, 264 bytes, or 520 bytes |
| | Symbol number | 9 | Indicate a number of OFDM symbols included in the payload symbol field of the SOF frame |
| | Broadcast flag bit | 1 | Indicate whether the SOF frame is a broadcast packet |
| | | | 0: non-broadcast packet; 1: broadcast packet |
| | Retransmission | 1 | Indicate whether the SOF frame is a retransmitted packet |
| | flag bit | | 0: non-retransmitted packet; 1: retransmitted packet |
| | Encryption flag bit | 1 | Reserved field that may subsequently support link layer encryption |
| | Tone Map Index | 4 | Identify a tone map index used to modulate the payload symbol field of the SOF frame, where a diversity mode corresponds to the physical block size |
| | Extended tone map index | 4 | If a diversity copy mode is set to 15, the diversity copy mode is the extended tone map index |

A length of the frame control field of the PPDU frame is 16 bytes. The frame control field includes the general field. The general field includes a delimiter type field and the variable area field. Different frame types (the beacon frame, the start of frame (start of frame, SOF) frame, the selective acknowledgment frame, and the inter-network coordination frame) are distinguished by using the delimiter type field. Different frame types correspond to different variable area fields. For example, as shown in Table 1, the general field includes the delimiter type field, the network type field, the network identifier field, the variable area field, the standard version number field, and the cyclic redundancy check (cyclic redundancy check, CRC) field. The delimiter type field indicates that the type of the PPDU frame may include the beacon frame, the SOF frame, the selective acknowledgment frame, and the inter-network coordination frame. As shown in Table 2, if the delimiter type field indicates that the type of the PPDU frame is the SOF frame, the variable area field of the SOF frame may include the source terminal equipment identifier (terminal equipment identifier, TEI) field, the destination TEI field, the link identifier field, the frame length field, the physical block number field, the symbol number field, the broadcast flag bit field, the retransmission flag bit field, the encryption flag bit field, the tone map index (tone map index, TMI) field, and the extended tone map index field. The SOF frame is mainly used for data transmission between devices. The tone map index indicates a coding rate, a modulation scheme, a diversity copy number, a physical block number, and a physical block type of a frame payload. A physical layer rate in the FC field may be indicated by information such as a modulation and coding scheme (modulation and coding scheme, MCS) identified by a TMI, a code rate (code rate), and a copy (copy) number.

An existing PLC protocol supports only point-to-point communication between electricity meters, and supports only single-input single-output (single-input single-output, SISO), resulting in a low rate of communication between the devices. A high frequency band between devices that are farther away from each other in a power grid is greatly attenuated, and a high frequency band between devices that are closer to each other is available. However, to ensure full network coverage and reduce a communication conflict between the devices, only a low frequency band like 0.7 MHz to 3 MHz or 2.5 MHz to 5.7 MHz can be generally used for PLC communication. As a result, communication bandwidth cannot adapt to a channel change, limiting a network communication rate. With emergence of new power grid application scenarios (charging piles, home energy consumption control, and the like), requirements of a larger capacity, a wider coverage range, and real-time communication are imposed on power line communication. Therefore, it is necessary to introduce high-order features (such as MIMO and high bandwidth) into a power line communication technology, to improve applicability of power line communication to different application scenarios. The frame control field in the existing power line communication standard defines four fixed frame formats, and no remaining reserved bit is available. As a result, it is difficult to extend and support features such as MIMO, bit loading (Bitloading), and high bandwidth, affecting network performance.

To resolve the foregoing technical problem, embodiments of this application provide the following solutions.

FIG. 3 is a schematic flowchart of a power line communication method according to an embodiment of this application. A first device and a second device are power line communication devices. For example, the first device and the second device may be power line communication modems. The method mainly includes the following steps.

S301: The first device generates a physical protocol data unit PPDU frame, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol.

S302: The first device sends the PPDU frame to the second device.

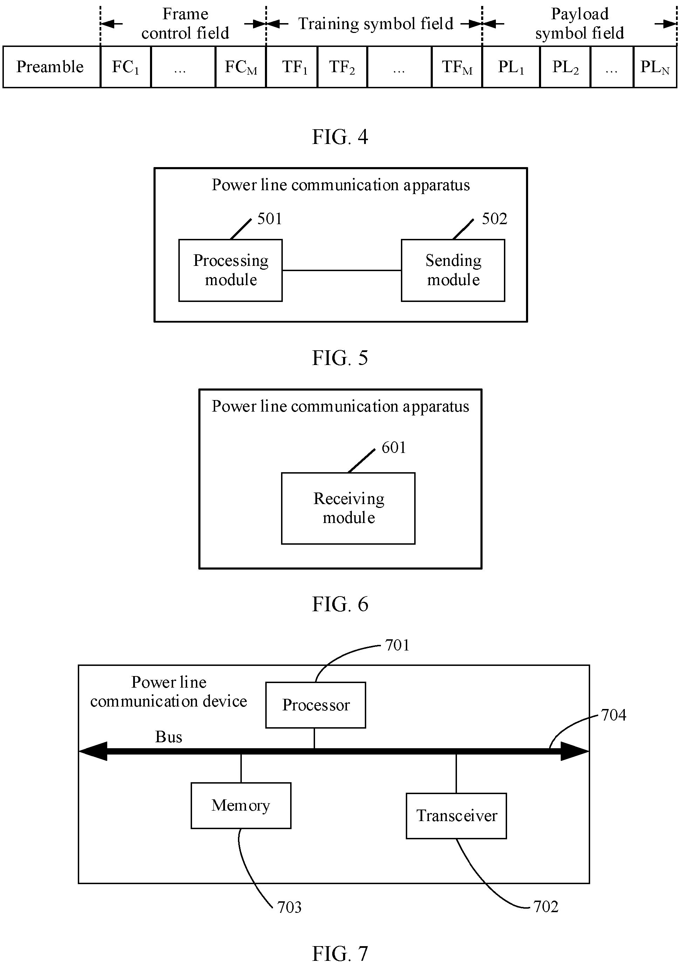

FIG. 4 is a diagram of a PPDU frame according to an embodiment of this application. The PPDU frame may include a preamble (preamble) field, a frame control field, a training symbol field, and a payload symbol field. Compared with those in the PPDU frame shown in FIG. 2, the frame control field is extended and defined, and the training symbol (TF) field is added. A length of the extended and defined FC field is 16 bytes, and a total number of bits in the variable area field remains unchanged, thereby maintaining protocol compatibility. The PPDU frame may also be referred to as a PLC 2.0 frame, and the PLC 2.0 frame is transmitted according to a PLC 2.0 protocol. Compared with a PLC 1.0 protocol, the PLC 2.0 protocol may support features such as MIMO, Bitloading, and high bandwidth.

The first device and the second device may also be referred to as PLC 2.0 devices, support use of the PLC 2.0 protocol, and may also be compatible with use of the PLC 1.0 protocol.

The frame control field includes a general field, the general field includes a delimiter type field and a standard version number field, the delimiter type field indicates a frame type of the PPDU frame, and the standard version number field indicates a power line communication PLC version supported by the PPDU frame. The frame type of the PPDU frame may include a beacon frame, an SOF frame, a selective acknowledgment frame, and an inter-network coordination frame. The power line communication PLC version supported by the PPDU frame may include PLC 1.0, PLC 2.0, and China Southern Power Grid. The type of the SOF frame is extended by using the standard version number field and the delimiter type field, to support the frame type of the PPDU frame, for example, a MIMO frame, an orthogonal frequency-division multiple access (orthogonal frequency-division multiple access, OFDMA) frame, or a multi-user multiple-input multiple-output (multi-user multiple-input multiple-output, MU-MIMO) frame.

For example, as shown in Table 3, the general field includes the delimiter type field and the standard version number field, and the general field may further include a network type field, a network identifier field, a variable area field, and a CRC field. The network type field may indicate a type of a network on which a device that sends a PPDU is. The network identifier field is used to distinguish between different high-speed carrier communication networks. Each high-speed carrier communication network needs to have a unique network identifier (network identifier, NID). The CRC field is used for cyclic redundancy check. A number of bits of each field is shown in Table 3. The variable area field varies with a different type of the PPDU frame (the beacon frame, the SOF frame, the selective acknowledgment frame, or the inter-network coordination frame). In this embodiment of this application, different extensions of the variable area field when the PPDU frame is the SOF frame are mainly described. The following specifically describes the variable area field of the SOF frame.

**Table 3**

| | Field definition | Number of bits | Descriptions |
|---|---|---|---|
| General field | Delimiter type | 3 | Indicate the type of the PPDU frame: |
| | | | 0: beacon frame; 1: SOF frame; 2: selective acknowledgment frame; 3: inter-network coordination frame |
| | | | others: reserved |
| | Network type | 5 | Indicate the type of the network on which the device that sends the PPDU is |
| | | | 0: power consumption information collection system in which the PPDU is transmitted; others: reserved |
| | Network identifier | 24 | Distinguish between different high-speed carrier communication networks, where each high-speed carrier communication network needs to have a unique network identifier NID |
| | Variable area | | Content in the variable area is determined by the delimiter type |
| | Standard version number | 4 | 0: PLC 1.0 |
| | | | 1: China Southern Power Grid |
| | | | 2: PLC 2.0 |
| | CRC | 24 | Cyclic redundancy check sequence of first 13 bytes in the frame control field |

The variable area field includes the frame identifier field and the frequency band field. The frame identifier field indicates the frame type of the start of frame SOF frame included in the PPDU frame. The frame type of the SOF frame may include a MIMO data frame, a MIMO training frame, an OFDMA/MU uplink (uplink, UL) frame, and an OFDMA/MU downlink (downlink, DL) frame. The frequency band field indicates the available frequency band of the training symbol and the payload symbol. The available frequency band may include 0.781 MHz to 11.96 MHz, 0.781 MHz to 2.930 MHz, 1.758 MHz to 11.96 MHz, 1.758 MHz to 2.930 MHz, 2 MHz to 11.96 MHz, and 2.441 MHz to 5.615 MHz. Optionally, the frequency band field indicates the available frequency band and a carrier index of the training symbol and the payload symbol. The available frequency band and the carrier index may include 0.781 MHz to 11.96 MHz, 32 to 490; 0.781 MHz to 2.930 MHz, 32 to 120; 1.758 MHz to 11.96 MHz, 72 to 490; 1.758 MHz to 2.930 MHz, 72 to 120; 2 MHz to 11.96 MHz, 80 to 490; and 2.441 MHz to 5.615 MHz, 100 to 230.

Optionally, the variable area field includes a source device identifier field and a destination device identifier field, the source device identifier field indicates an identifier of the first device, and the destination device identifier field indicates an identifier of the second device. The first device and the second device that perform power line communication may be determined by using the source device identifier field and the destination device identifier field.

Optionally, the variable area field includes a frame length (frame length, FL) field. A PLC 1.0 device may parse the FL field in the FC field to perform channel backoff, so that a PLC 2.0 device and the PLC 1.0 device coexist.

It should be noted that, for the redefined PPDU frame, a link identifier field, an encryption flag bit field, and a retransmission flag field are no longer reserved in the frame control field. During data transmission, the link identifier field, the encryption flag bit field, and the retransmission flag field may be moved to a MAC frame header. For the redefined PPDU frame, a broadcast flag bit field may also be no longer reserved in the frame control field. If the SOF frame is a non-broadcast frame, the PLC 2.0 protocol or the PLC 1.0 protocol may be used. If the SOF frame is a broadcast frame, the PLC 1.0 protocol may be used.

Optionally, the variable area field includes a modulation and coding scheme MCS field and/or a code rate (code rate) field, the MCS field indicates a modulation scheme of the SOF frame, and the code rate field indicates a coding rate of the SOF frame.

Optionally, the variable area field includes a physical block size (physical block size, PBSize) field and/or a physical block number (physical block number, PBNum) field, the physical block size field indicates a size of a physical block carried in the payload symbol field, and the physical block number field indicates a maximum number of physical blocks supported by the payload symbol field for carrying.

It should be noted that, for the redefined PPDU frame, an OFDM symbol number field is no longer reserved in the frame control field. After receiving the PPDU frame, the second device can obtain, through calculation based on an MCS, a code rate, the size of the physical block, a number of physical blocks, and the like, a number of OFDM symbols carried in the payload symbol field.

Optionally, the variable area field includes a data beamforming flag field, and the data beamforming flag field indicates whether beamforming is used for the SOF frame. Optionally, the variable area field includes a bit loading (Bitloading) field, and the bit loading field indicates whether bit loading is used for the SOF frame. An SOF frame for which beamforming and bit loading are used may support ToneMap grouping, that is, a power frequency periodicity may be divided into a plurality of windows. A different number of subcarriers to be transmitted in each of the plurality of windows is determined based on a different signal-to-noise ratio corresponding to an interference variation.

Beamforming generates a directional beam by adjusting a weighting coefficient of each array element in an antenna array, to obtain an obvious array gain. Bit loading is a commonly used adaptive resource allocation technology, and supports a different modulation parameter for each subcarrier, including a number of loaded bits, constellation mapping, and transmit power, to improve a transmission rate and robustness of a system. At a transmit end, based on channel quality of each subcarrier, matching is adaptively performed on the modulation parameter of the carrier. For a subcarrier with better channel quality, higher transmit power may be obtained, and a high-order constellation mapping diagram is used, to provide a higher transmission rate. For a subcarrier with poorer channel quality, transmit power may be reduced, and a low-order constellation mapping diagram is used, to improve a transmission capacity of the entire system.

Optionally, the variable area field may include a reserved (reserved) field, and another additional field may be added by using the reserved field. For example, content for marking the OFDMA frame and a MU-MIMO data frame may be added to the reserved field.

The following uses an example in which the frame type of the SOF frame is the MIMO data frame or the MIMO training frame for description.

As shown in Table 4, if the frame type of the SOF frame is the MIMO data frame, the variable area field may include a source TEI field, a destination TEI field, a frame identifier field, a physical block number field, a training symbol number field, a frame length field, a Bitloading or TMI field, a ToneMap/TxBF index field, a date TxBF flag field, an MCS field, a CodeRate field, a stream number field, a PBsize field, a diversity copy number field, a frequency band field, and a reserved field. A number of bits of each field is shown in Table 4.

The source TEI field indicates a source terminal equipment identifier TEI of the SOF frame. The destination TEI field indicates a destination terminal equipment identifier TEI of the SOF frame. The frame identifier field indicates that the type of the SOF frame is the MIMO data frame. The physical block number field indicates a maximum number of physical blocks supported by the payload symbol field for carrying. The training symbol number field indicates a number of training symbols after the FC field. The frame length field indicates duration of a channel occupied by a transmission process, an interframe space, and the like of the MIMO data frame. The Bitloading or TMI field indicates whether Bitloading coding or fixed TMI coding is used for the MIMO data frame. The ToneMap/TxBF index field indicates an index of a ToneMap table if Bitloading coding is used for the MIMO data frame. The date TxBF flag field indicates whether beamforming is used for the OFDM symbol. The MCS field indicates a modulation scheme of the MIMO data frame. The stream number field indicates a number of spatial streams, and supports a maximum of two streams. The PBsize field indicates a PB specification. The frequency band field indicates the available frequency band and the carrier index of the training symbol and the payload symbol.

**Table 4**

| Frame type | Field definition | Number of bits | Descriptions |
|---|---|---|---|
| Variable area field of the MIMO data frame | Source TEI | 12 | Source terminal equipment identifier TEI of the SOF frame |
| | Destination TEI | 12 | Destination terminal equipment identifier TEI of the SOF frame, where after receiving the SOF frame, a destination device needs to send a selective acknowledgment frame in response |
| | Frame identifier | 2 | Indicate the type of the SOF frame: |
| | | | 0: MIMO data frame; 1: MIMO training frame |
| | | | 2: OFDMA/MU DL; 3: OFDMA/MU UL |
| | Physical block number | 4 | Indicate the maximum number of physical blocks supported by the payload symbol field for carrying |
| | Training symbol number | 2 | Indicate the number of training symbols after the FC field; Ntf+1 for a single stream; (Ntf+1)*2 for two streams |
| | Frame length | 12 | Indicate the duration of the channel occupied by the transmission process, the interframe space, and the like of the MIMO data frame, in a unit of 10 microseconds |
| | Bitloading or TMI | 1 | Indicate whether Bitloading coding or fixed TMI coding is used for the MIMO data frame |
| | | | 0: Bitloading coding; 1: fixed TMI coding |
| | ToneMap/TxBF | 3 | Indicate the index of the ToneMap table if Bitloading |
| | index | | coding is used for the MIMO data frame |
| | Date TxBF flag | 1 | Whether beamforming is used for the OFDM symbol |
| | MCS | 2 | Indicate the modulation scheme of the MIMO data frame 0: BPSK; 1: QPSK; 2: 16QAM; 3: 64QAM |
| | CodeRate | 2 | Code rate of the MIMO data frame for which Bitloading coding is used: |
| | | | 0: 1/2; 1: 16/18; 2: 16/21 |
| | | | Fixed TMI coding is used, and a code rate is the same as a code rate corresponding to a TMI |
| | Stream number | 1 | Number of spatial streams, where a maximum of two streams is supported |
| | | | 0: 1 |
| | | | 1: 2 |
| | PBsize | 3 | PB specification: 0: 520; 1: 264; 2: 136; 3: 72; 4: 40 |
| | Diversity copy number | 3 | Copy number: 0: 1; 1: 2; 2: 4; 3: 5; 4: 7; 5: 11 |
| | Frequency band | 3 | Indicate the available frequency band and the carrier index of the training symbol and the payload symbol |
| | | | 0: 0.781 MHz to 11.96 MHz, 32 to 490; |
| | | | 1: 0.781 MHz to 2.930 MHz, 32 to 120; |
| | | | 2: 1.758 MHz to 11.96 MHz, 72 to 490; |
| | | | 3: 1.758 MHz to 2.930 MHz, 72 to 120; |
| | | | 4: 2 MHz to 11.96 MHz, 80 to 490; |
| | | | 5: 2.441 MHz to 5.615 MHz, 100 to 230 |
| | Reserved | 5 | |

As shown in Table 5, if the frame type of the SOF frame is the MIMO training frame, the variable area field may include a source TEI field, a destination TEI field, a frame identifier field, a PL symbol number field, a frame length field, a MIMO training frame identifier field, a training symbol number field, a ToneMap group field, a ToneMap index field, a date TxBF flag field, a stream number field, a frequency band field, and a reserved field. A number of bits of each field is shown in Table 5.

The MIMO training frame identifier field indicates whether a current MIMO training frame is a TxBF training frame or a Bitloading training frame. If the second device receives the TxBF training frame, the second device feeds back a beamforming matrix V. If the second device receives the Bitloading training frame, the second device feeds back a Bitloading mapping table. The ToneMap group field indicates a number of carriers in a group of the fed-back beamforming matrix V or Bitloading mapping table. The ToneMap index field indicates indices of a to-be-trained Bitloading group and TxBF group, and the indices correspond to an index of the window of the power frequency periodicity obtained through division. The index of the window of the power frequency periodicity (20 ms) may be 0 to 7, and duration of each window may be 2.5 ms. For other fields, refer to Table 4. Details are not described herein again.

**Table 5**

| Frame type | Field definition | Number of bits | Descriptions |
|---|---|---|---|
| Variable area field of the | Source TEI | 12 | Source terminal equipment identifier TEI of the SOF frame |
| MIMO training frame | Destination TEI | 12 | Destination terminal equipment identifier TEI of the SOF frame, where after receiving the SOF frame, a destination device needs to send a selective acknowledgment frame in response |
| | Frame identifier | 2 | Indicate the type of the SOF frame: |
| | | | 0: MIMO data frame; 1: MIMO training frame |
| | | | 2: OFDMA/MU DL; 3: OFDMA/MU UL |
| | PL symbol number | 6 | Number of OFDM symbols in random sequence data in the MIMO training frame |
| | Frame length | 12 | Indicate duration of a channel occupied by a transmission process, an interframe space, and the like of the MIMO training frame, in a unit of 10 microseconds |
| | MIMO training frame identifier | 1 | Identify whether the MIMO training frame is the TxBF training frame or the Bitloading training frame |
| | | | 0: TxBF training frame; 1: Bitloading training frame |
| | Training symbol number | 3 | Number of training symbols after the FC field; Ntf+1 for a single stream; (Ntf+1)*2 for two streams |
| | ToneMap group | 2 | Number of subcarriers corresponding to one Bitloading group or TxBF group |
| | | | 0: 1 indicates that no grouping is performed, and each subcarrier corresponds to one Bitloading bit mapping result and one TxBF code |
| | | | 1: 2 |
| | | | 2: 4 |
| | | | 3: 8 |
| | ToneMap index | 3 | Indicate the indices of the to-be-trained Bitloading group and TxBF group, where the indices correspond to the index of the window of the power frequency periodicity obtained through division |
| | Date TxBF flag | 1 | Indicate whether beamforming is used for the OFDM symbol |
| | | | 0: TxBF is not used; 1: TxBF is used |
| | Stream number | 1 | Indicate a number of spatial streams, where a maximum of two streams is supported |
| | | | 0: 1 |
| | | | 1: 2 |
| | Frequency band | 3 | Indicate the available frequency band and the carrier index of the training symbol and the payload symbol |
| | | | 0: 0.781 MHz to 11.96 MHz, 32 to 490; |
| | | | 1: 0.781 MHz to 2.930 MHz, 32 to 120; |
| | | | 2: 1.758 MHz to 11.96 MHz, 72 to 490; |
| | | | 3: 1.758 MHz to 2.930 MHz, 72 to 120; |
| | | | 4: 2 MHz to 11.96 MHz, 80 to 490; |
| | | | 5: 2.441 MHz to 5.615 MHz, 100 to 230 |
| | Reserved | 10 | |

In this embodiment of this application, the PPDU frame is redefined. The redefined PPDU frame includes the frame control field, the training symbol field, and the payload symbol field. Channel estimation in multiple-input multiple-output MIMO and the extended bandwidth is implemented by using the training symbol field. The frame type of the start of frame SOF frame included in the PPDU frame is indicated by the frame identifier field. The available frequency band of the training symbol and the payload symbol is indicated by the frequency band field. In this way, power line communication supports features such as MIMO and high bandwidth, thereby improving overall network performance.

It may be understood that, in the foregoing method embodiments, the method and the operations that are implemented by the power line communication device may alternatively be implemented by a component (for example, a chip or a circuit) that may be used in the power line communication device.

In embodiments of this application, the power line communication device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division during actual implementation. The following uses an example in which each functional module is obtained through division based on each corresponding function for description.

The foregoing describes in detail the method provided in embodiments of this application with reference to FIG. 3. With reference to FIG. 5 and FIG. 6, the following describes in detail power line communication apparatus provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

FIG. 5 is a diagram of a structure of a power line communication apparatus according to an embodiment of this application. The power line communication apparatus may include a processing module 501 and a sending module 502.

The power line communication apparatus may implement steps or procedures performed by the first device corresponding to the foregoing method embodiments, for example, may be the first device, or a chip or a circuit configured in the first device. The sending module 502 is configured to perform receiving and sending-related operations of the first device in the foregoing method embodiments, and the processing module 501 is configured to perform a processing-related operation of the first device in the foregoing method embodiments.

The processing module 501 is configured to generate a physical protocol data unit PPDU frame, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol.

The sending module 502 is configured to send the PPDU frame to a second device.

Optionally, the frame control field includes a general field, the general field includes a delimiter type field and a standard version number field, the delimiter type field indicates a frame type of the PPDU frame, and the standard version number field indicates a power line communication PLC version supported by the PPDU frame.

Optionally, the variable area field includes a source device identifier field and a destination device identifier field, the source device identifier field indicates an identifier of the first device, and the destination device identifier field indicates an identifier of the second device.

Optionally, the variable area field includes a modulation and coding scheme MCS field and/or a code rate field, the MCS field indicates a modulation scheme of the SOF frame, and the code rate field indicates a coding rate of the SOF frame.

Optionally, the variable area field includes a physical block size field and/or a physical block number field, the physical block size field indicates a size of a physical block carried in the payload symbol field, and the physical block number field indicates a maximum number of physical blocks supported by the payload symbol field for carrying.

Optionally, the variable area field includes a data beamforming flag field, and the data beamforming flag field indicates whether beamforming is used for the SOF frame.

Optionally, the variable area field includes a bit loading field, and the bit loading field indicates whether bit loading is used for the SOF frame.

It should be noted that, for implementation of each module, refer to corresponding descriptions in the method embodiment shown in FIG. 3, to perform the method and the function performed by the first device in the foregoing embodiment.

FIG. 6 is a diagram of a structure of another power line communication apparatus according to an embodiment of this application. The power line communication apparatus may include a receiving module 601.

The power line communication apparatus may implement steps or procedures performed by the second device corresponding to the foregoing method embodiments, for example, may be the second device, or a chip or a circuit configured in the second device. The receiving module 601 is configured to perform receiving and sending-related operations of the second device in the foregoing method embodiments.

The receiving module 601 is configured to receive a physical protocol data unit PPDU frame sent by a first device, where the PPDU frame includes a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field includes a variable area field, the variable area field includes a frame identifier field and a frequency band field, the frame identifier field indicates a frame type of a start of frame SOF frame included in the PPDU frame, and the frequency band field indicates an available frequency band of the training symbol and the payload symbol.

Optionally, the frame control field further includes a general field, the general field includes a delimiter type field and a standard version number field, the delimiter type field indicates a frame type of the PPDU frame, and the standard version number field indicates a power line communication PLC version supported by the PPDU frame.

Optionally, the variable area field includes a source device identifier field and a destination device identifier field, the source device identifier field indicates an identifier of the first device, and the destination device identifier field indicates an identifier of the second device.

Optionally, the variable area field includes a modulation and coding scheme MCS field and/or a code rate field, the MCS field indicates a modulation scheme of the SOF frame, and the code rate field indicates a coding rate of the SOF frame.

Optionally, the variable area field includes a physical block size field and/or a physical block number field, the physical block size field indicates a size of a physical block carried in the payload symbol field, and the physical block number field indicates a maximum number of physical blocks supported by the payload symbol field for carrying.

Optionally, the variable area field includes a data beamforming flag field, and the data beamforming flag field indicates whether beamforming is used for the SOF frame.

Optionally, the variable area field includes a bit loading field, and the bit loading field indicates whether bit loading is used for the SOF frame.

It should be noted that, for implementation of each module, refer to corresponding descriptions in the method embodiment shown in FIG. 3, to perform the method and the function performed by the second device in the foregoing embodiment.

FIG. 7 is a diagram of a structure of a power line communication device according to an embodiment of this application. The power line communication device may be used in the system shown in FIG. 1, to perform functions of the power line communication device in the foregoing method embodiments, or implement steps or procedures performed by the power line communication device in the foregoing method embodiments.

As shown in FIG. 7, the power line communication device includes a processor 701 and a transceiver 702. Optionally, the power line communication device further includes a memory 703. The processor 701, the transceiver 702, and the memory 703 may communicate with each other through an internal connection path, to transfer a control signal and/or a data signal. The memory 703 is configured to store a computer program. The processor 701 is configured to: invoke the computer program from the memory 703 and run the computer program, to control the transceiver 702 to send and receive signals. Optionally, the power line communication device may further include an antenna, configured to send, via a radio signal, uplink data or uplink control signaling output by the transceiver 702.

The processor 701 and the memory 703 may be combined into one processing apparatus. The processor 701 is configured to execute program code stored in the memory 703 to implement the foregoing functions. During specific implementation, the memory 703 may alternatively be integrated into the processor 701, or independent of the processor 701. The processor 701 may correspond to the processing module in FIG. 5.

The transceiver 702 may correspond to the sending module in FIG. 5 or the receiving module in FIG. 6, and may also be referred to as a transceiver unit or a transceiver module. The transceiver 702 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the power line communication device shown in FIG. 7 can implement each process related to the power line communication device in the method embodiment shown in FIG. 3. Operations and/or functions of the modules in the power line communication device are intended to implement corresponding procedures in the foregoing method embodiments. For details, refer to the descriptions in the foregoing method embodiments. To avoid repetition, detailed descriptions are appropriately omitted herein.

The processor 701 may be configured to perform an action that is implemented inside the power line communication device and that is described in the foregoing method embodiments, and the transceiver 702 may be configured to perform an action that is of sending to or receiving from another power line communication device and that is described in the foregoing method embodiments. For details, refer to the descriptions in the foregoing method embodiments. Details are not described herein again.

The processor 701 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits described with reference to content disclosed in this application. The processor 701 may alternatively be a combination for implementing a computing function, for example, a combination including one or more microprocessors, or a combination of a digital signal processor and a microprocessor. A communication bus 704 may be a peripheral component interconnect PCI bus, an extended industry standard architecture EISA bus, or the like. The bus may be classified into an address bus, a data bus, a control bus, and the like. For ease of representation, only one bold line is used for representation in FIG. 7, but this does not mean that there is only one bus or only one type of bus. The communication bus 704 is configured to implement a connection and communication between these components. The transceiver 702 in this embodiment of this application is configured to perform signaling or data communication with another node device. The memory 703 may include a volatile memory, for example, a non-volatile dynamic random access memory (non-volatile random access memory, NVRAM), a phase change random access memory (phase change RAM, PRAM), or a magnetoresistive random access memory (magnetoresistive RAM, MRAM), and may further include a non-volatile memory, for example, at least one magnetic disk storage device, an electronically erasable programmable read-only memory (electrically erasable programmable read-only memory, EEPROM), a flash memory, for example, a NOR flash memory (NOR flash memory) or a NAND flash memory (NAND flash memory), or a semiconductor device, for example, a solid state drive (solid state disk, SSD). Optionally, the memory 703 may alternatively be at least one storage apparatus that is away from the processor 701. Optionally, the memory 703 may further store a group of computer program code or configuration information. Optionally, the processor 701 may further execute the program stored in the memory 703. The processor may cooperate with the memory and the transceiver, to perform any method and function of the power line communication device in the foregoing embodiments of this application.

An embodiment of this application further provides a chip system. The chip system includes a processor, configured to support a power line communication device in implementing functions in any one of the foregoing embodiments, for example, generating or processing the PPDU frame in the foregoing method.

In a possible design, the chip system may further include a memory. The memory is configured to store a computer program and data that are necessary for a terminal device or a network device. The chip system may include a chip, or may include the chip and another discrete component. An input and an output of the chip system respectively correspond to receiving and sending operations of the terminal device or the network device in the method embodiments.

According to the method provided in embodiments of this application, this application further provides a computer program product. The computer program product includes a computer program. When the computer program is run on a computer, the computer is enabled to perform the method in any one of the embodiments shown in FIG. 3.

According to the method provided in embodiments of this application, this application further provides a computer-readable medium. The computer-readable medium stores a computer program. When the computer program is run on a computer, the computer is enabled to perform the method in any one of the embodiments shown in FIG. 3.

According to the method provided in embodiments of this application, this application further provides a communication system, including one or more power line communication devices.

The foregoing embodiments may be all or partially implemented by software, hardware, firmware, or any combination thereof. When being implemented by the software, the foregoing embodiments may be all or partially implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disc (solid state disc, SSD)), or the like.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A power line communication method, wherein the method comprises:
generating, by a first device, a physical protocol data unit PPDU frame, wherein the PPDU frame comprises a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field comprises a variable area field, the variable area field comprises a frame identifier field and a frequency band field, the frame identifier field indicates a frame type of a start of frame SOF frame comprised in the PPDU frame, and the frequency band field indicates an available frequency band of the training symbol and the payload symbol; and
sending, by the first device, the PPDU frame to the second device.

2. The method according to claim 1, wherein the frame control field comprises a general field, the general field comprises a delimiter type field and a standard version number field, the delimiter type field indicates a frame type of the PPDU frame, and the standard version number field indicates a power line communication PLC version supported by the PPDU frame.

3. The method according to claim 1 or 2, wherein the variable area field comprises a source device identifier field and a destination device identifier field, the source device identifier field indicates an identifier of the first device, and the destination device identifier field indicates an identifier of the second device.

4. The method according to any one of claims 1 to 3, wherein the variable area field comprises a modulation and coding scheme MCS field and/or a code rate field, the MCS field indicates a modulation scheme of the SOF frame, and the code rate field indicates a coding rate of the SOF frame.

5. The method according to any one of claims 1 to 4, wherein the variable area field comprises a physical block size field and/or a physical block number field, the physical block size field indicates a size of a physical block carried in the payload symbol field, and the physical block number field indicates a maximum number of physical blocks supported by the payload symbol field for carrying.

6. The method according to any one of claims 1 to 5, wherein the variable area field comprises a data beamforming flag field, and the data beamforming flag field indicates whether beamforming is used for the SOF frame.

7. The method according to any one of claims 1 to 6, wherein the variable area field comprises a bit loading field, and the bit loading field indicates whether bit loading is used for the SOF frame.

8. A power line communication method, wherein the method comprises:
receiving, by a second device, a physical protocol data unit PPDU frame sent by a first device, wherein the PPDU frame comprises a frame control field, a training symbol field, and a payload symbol field, the payload symbol field is used to modulate a to-be-transmitted payload symbol, the training symbol field is used to carry a training symbol, the training symbol field is used for channel estimation in multiple-input multiple-output MIMO and extended bandwidth, the frame control field comprises a variable area field, the variable area field comprises a frame identifier field and a frequency band field, the frame identifier field indicates a frame type of a start of frame SOF frame comprised in the PPDU frame, and the frequency band field indicates an available frequency band of the training symbol and the payload symbol.

9. The method according to claim 8, wherein the frame control field further comprises a general field, the general field comprises a delimiter type field and a standard version number field, the delimiter type field indicates a frame type of the PPDU frame, and the standard version number field indicates a power line communication PLC version supported by the PPDU frame.

10. The method according to claim 8 or 9, wherein the variable area field comprises a source device identifier field and a destination device identifier field, the source device identifier field indicates an identifier of the first device, and the destination device identifier field indicates an identifier of the second device.

11. The method according to any one of claims 8 to 10, wherein the variable area field comprises a modulation and coding scheme MCS field and/or a code rate field, the MCS field indicates a modulation scheme of the SOF frame, and the code rate field indicates a coding rate of the SOF frame.

12. The method according to any one of claims 8 to 11, wherein the variable area field comprises a physical block size field and/or a physical block number field, the physical block size field indicates a size of a physical block carried in the payload symbol field, and the physical block number field indicates a maximum number of physical blocks supported by the payload symbol field for carrying.

13. The method according to any one of claims 8 to 12, wherein the variable area field comprises a data beamforming flag field, and the data beamforming flag field indicates whether beamforming is used for the SOF frame.

14. The method according to any one of claims 8 to 13, wherein the variable area field comprises a bit loading field, and the bit loading field indicates whether bit loading is used for the SOF frame.

15. A power line communication apparatus, comprising a memory and a processor, wherein the memory is configured to store a computer program, and the processor runs the computer program to enable the communication apparatus to perform the method according to any one of claims 1 to 7.

16. A power line communication apparatus, comprising a memory and a processor, wherein the memory is configured to store a computer program, and the processor runs the computer program to enable the communication apparatus to perform the method according to any one of claims 8 to 14.

17. A computer-readable storage medium, wherein the computer-readable storage medium comprises a computer program, and when the computer program is run by a processor, the method according to any one of claims 1 to 14 is implemented.

18. A chip, wherein the chip comprises a processor and a communication interface, the communication interface is configured to communicate with an external component or an internal component, and the processor is configured to implement the method according to any one of claims 1 to 14.
